# EUROPÄISCHE PATENTANMELDUNG

(11) **EP 1 701 297 A1**
(43) Veröffentlichungstag der Anmeldung: **13.09.2006**
(21) Anmeldenummer: 05101800.0
(22) Anmeldetag: 09.03.2005
(51) Int. Cl.: G06K 19/077, G11C 5/00, G06K 19/073, G11B 23/50

(54) **Datenspeicher**

(71) Anmelder: Swissbit AG, 9552 Bronschhofen (CH)
(72) Erfinder: Wehrli, Christoph, 8200 Schaffhausen (CH)
(74) Vertreter: Hepp, Dieter

(57) **Zusammenfassung**

Ein Datenspeicher, insbesondere ein tragbarer Datenspeicher (1) weist ein Gehäuse (2) auf. Im Gehäuse ist wenigstens ein Speichermedium (3) angeordnet. Das Gehäuse weist Zerstörmittel zum irreversiblen mechanischen Zerstören des Speichermediums (3) auf. Mittels von aussen zugänglichen Betätigungsmitteln (5) am Gehäuse lassen sich die Zerstörmittel (4) betätigen.

## Beschreibung

Die Erfindung betrifft einen Datenspeicher mit den Merkmalen des Oberbegriffs der unabhängigen Patentansprüche.

Datenspeicher sind heute in einer grossen Zahl und Vielfalt im Einsatz. Ein Problem, das sich bei vielen Arten von Datenspeichern stellt ist die Datensicherheit. Insbesondere bei der Entsorgung von Speichermedien muss für den Fall, dass vertrauliche Daten gespeichert werden, sichergestellt werden, dass diese Daten nicht durch Unberechtigte aus dem Speicher ausgelesen werden können. Das Löschen der Daten auf herkömmliche Art und Weise ist dafür häufig untauglich. Technisch besteht oft die Möglichkeit, Daten zu rekonstruieren, auch wenn diese durch einen Rechner gelöscht worden sind. Auch die Verschlüsselung von Daten durch Verschlüsselungsalgorithmen ist in diesem Fall nicht immer ausreichend. Mit zunehmender Rechenleistung sind Verschlüsselungsmechanismen und Passwörter häufig zu knacken, wenn ausreichend viel Zeit zur Verfügung steht.

Deshalb hat es sich eingebürgert, Datenträger wie beispielsweise Festplatten beim Entsorgen von Geräten mechanisch, beispielsweise durch Durchbohren zu zerstören. Diese Methode ist insbesondere anwendbar, wenn es sich um fest in Computer eingebaute Datenspeicher wie Festplatten handelt. Diese können im Rahmen der Entsorgung eines Gerätes auf diese Weise unlesbar gemacht werden.

Diese Methode ist aber bei tragbaren Datenspeichern nicht ohne Weiteres anwendbar, da z.B. Werkzeug wie Bohrer zum Zerstören nicht immer zur Verfügung stehen und der Aufwand für die Unschädlichmachung zu gross wäre.

Aus verschiedenen Dokumenten aus dem Stand der Technik sind Systeme bekannt, welche bei missbräuchlichem Zugriff auf Datenspeicher zur Zerstörung des Speichers und damit der Daten führen. Solche Systeme sind beispielsweise aus EP 142 013, FR 2 710 179 oder aus DE 10 2004 005 466 bekannt. Für ein gezieltes Zerstören des Datenspeichers sind diese Systeme aber nicht geeignet.

Aus EP 1 059 275 ist eine pyrotechnische Schicht zur gezielten Zerstörung von maschinenlesbaren Daten auf Datenträgern bekannt. Diese Schicht ist insbesondere für Datenträger wie Compact Discs vorgeschlagen. Die Initiierung der pyrotechnischen Schicht erfolgt über eine Zündkette mit einem handelsüblichen Zünder. Dieses Verfahren ist ebenfalls verhältnismässig kompliziert. Ausserdem kann der Einsatz von pyrotechnischen Mitteln im Hinblick auf die Akzeptanz von Benutzern problematisch sein, insbesondere wenn der Datenträger ein kleiner tragbarer Datenträger ist, der durch den Benutzer beispielsweise in Hemd- oder Hosentaschen mitgetragen wird.

Es ist daher eine Aufgabe der vorliegenden Erfindung, die Nachteile des Bekannten zu vermeiden, insbesondere also einen Datenträger zu schaffen, dessen Daten sich durch einen Benutzer auf einfache Art und Weise nicht rekonstruierbar löschen lassen. Der Datenspeicher soll trotzdem für den Benutzer keine Risiken bergen.

Erfindungsgemäss werden diese und weitere Aufgaben mit einem Datenspeicher mit den Merkmalen des kennzeichnenden Teils der unabhängigen Patentansprüche gelöst.

Der Datenspeicher gemäss der Erfindung ist bevorzugt ein tragbarer Datenspeicher. Beispielsweise kann es ein USB-Stick sein. Der Datenspeicher weist ein Gehäuse auf. Im Gehäuse ist wenigstens ein Speichermedium angeordnet. Das Speichermedium ist typischerweise ein digitaler Speicher auf der Basis von Halbleiterelementen.

Im Gehäuse sind Zerstörmittel zum irreversiblen mechanischen Zerstören des Speichermediums angeordnet. Erfindungsgemäss ist das Gehäuse mit von aussen zugänglichen Betätigungsmitteln versehen. Durch die Betätigungsmittel können die Zerstörmittel betätigt werden. Durch das Betätigen der Betätigungsmittel kann also das Speichermedium im Datenspeicher irreversibel zerstört werden.

Gemäss einer bevorzugten Ausführungsform der Erfindung sind die Zerstörmittel durch ein im Gehäuse bewegbar angeordnetes Element gebildet. Dieses Element kann von einer Normalposition in eine Zerstörposition gebracht werden. Üblicherweise befindet sich das Element in der Normalposition. Das Speichermedium ist in diesem Fall nicht beeinträchtigt. Sobald das Element von der Normalposition in die Zerstörposition bewegt wird, wird das Speichermedium durch mechanischen Kontakt mit dem Element mechanisch und daher irreversibel zerstört. Insbesondere bei Halbleiterspeichermedien führt eine mechanische Zerstörung, typischerweise ein Bruch, aufgrund der Art und Weise der Speicherung der Daten dazu, dass das Speichermedium dauerhaft unbrauchbar wird.

Typischerweise ist das Speichermedium ein Halbleiterspeicher wie beispielsweise ein Flashspeicher.

Gemäss einer weiteren bevorzugten Ausführungsform ist das Element, welches zur Zerstörung des Speichermediums führt, zwischen einer Leiterplatte und einem auf dieser aufgebrachten Halbleiterspeicherelement angeordnet. Durch Bewegen des Elements wird das Halbleiterspeicherelement zerbrochen.

Bevorzugt ist das Element ein flaches, beispielsweise metallisches, plattenförmiges Element. Das Element kann um eine eigene Achse drehbar im Gehäuse angeordnet sein. Durch Drehen des Elements wirkt eine Kraft auf das darüber liegende Speicherelement, welche zu einer mechanischen Zerstörung des Speicherelementes führt. Durch geeignete Wahl der Dimensionen eines flächigen Elements können ausserdem Hebelkräfte ausgenutzt werden.

Es ist aber auch denkbar, das Speichermedium durch Bewegen, insbesondere Verschieben eines plättchenförmigen Elements zu zerstören. Dazu kann das Element z.B. mit einer Oberflächenstruktur versehen sein, welche bei Bewegung die Oberfläche des Speichermediums zerstört. Das Element kann auch mit dem Speichermedium verklebt sein, so dass eine Bewegung des Elements zu eine Zerstörung des Speichermediums führt.

Bevorzugt weisen die Betätigungsmittel einen von aussen am Gehäuse betätigbaren Hebel oder Knopf auf. Der Hebel oder Knopf steht dabei mit dem Element derart in Wirkverbindung, dass durch Betätigung des Knopfs bzw. Hebels das Element von der Normalposition in die Zerstörposition gebracht wird.

Im Hinblick auf Schutz des Speichers gegenüber Umgebungseinflüssen ist es bevorzugt, den Betätigungsknopf wasser-, staub-und/oder luftdicht im Gehäuse anzuordnen. Dazu können beispielsweise bewegliche, wasserdichte Membranen verwendet werden, welche eine mechanische Kopplung zwischen dem Betätigungsknopf und den Zerstörmitteln im Gehäuse erlauben.

Bevorzugt weist der Speicher ausserdem Mittel zum Verhindern des unbeabsichtigten Betätigens des Betätigungsmittels auf. Es soll damit sichergestellt werden, dass nicht versehentlich das Speichermedium zerstört und die Daten unwiederbringlich verloren gehen. Dazu können beispielsweise zwei Mechanismen vorgesehen werden, welche in Sequenz nacheinander betätigt werden müssen. Beispielsweise kann ein Hebel mit einem Innenmehrkant zum Betätigen vorgesehen werden, der bevor der Betätigung mit einem Aussenmehrkant an den Zerstörmitteln in Eingriff gebracht werden muss. Solche Mittel können aber auch darin bestehen, dass zwei Knöpfe vorgesehen sind, welche gleichzeitig betätigt oder in einer bestimmten Sequenz nacheinander betätigt werden müssen. Es ist auch denkbar, einen Betätigungsknopf mit Sollbruchstellen mit dem Rest des Gehäuses zu verbinden, sodass die Sollbruchstellen nur durch gewisse Kraftaufwendung, welche oberhalb von üblich auftretenden Kräften liegt, zerstört werden können. Es ist ausserdem auch denkbar, den Betätigungsknopf beispielsweise mit einer Folie abzudecken, sodass der Betätigungsknopf erst betätigt werden kann, wenn die Folie vorher abgezogen worden ist.

Ausserdem ist es auch denkbar, die Betätigungsmittel nur mit Werkzeugen betätigbar auszubilden. Beispielsweise ist eine Betätigung mit überall vorhandenen Werkzeugen wie Schraubenzieher oder spitzen Gegenständen denkbar.

Es ist ausserdem denkbar, in der Struktur des Speichermediums bereits eine Sollbruchstelle festzulegen. Auf diese Weise kann ein sicheres und gezieltes Zerstören des Speichermediums gefördert werden.

Es ist ausserdem auch möglich, das Element, welches das Speichermedium zerstört gezielt so auszubilden, dass eine starke Zerstörung der Struktur des Speichermediums bewirkt wird. Beispielsweise könnte das Element gezackt ausgebildet sein.

Um dem Benutzer anzuzeigen, dass eine Zerstörung stattgefunden hat ist es ausserdem denkbar, Mittel zum Anzeigen der Zerstörung vorzusehen. Dies könnte beispielsweise verkapselter Farbstoff sein. Bei Betätigen der Betätigungsmittel wird gleichzeitig die Kapsel zerstört, sodass Farbe im Innern des Gehäuses ausläuft.

Selbstverständlich sind im Rahmen der Erfindung auch andere Zerstörmechanismen denkbar. Statt flachen Elementen könnten spitze Elemente verwendet werden, welche die Oberfläche eines Speichermediums angreifen. Auch wäre es denkbar, verkapselte Farben oder verkapselte leitfähige Flüssigkeiten vorzusehen, welche bei Zerstörung von Kapseln das Speichermedium überdecken und so unbrauchbar machen.

Die Erfindung wird im Folgenden in Ausführungsbeispielen und anhand der Zeichnungen näher erläutert. Es zeigen:
- Figur 1: eine schematische Darstellung eines erfindungsgemässen Datenspeichers im Querschnitt,
- Figur 2a: eine vergrösserte Darstellung des Speichermediums des Datenspeichers aus Figur 1 in einer Normalposition,
- Figur 2b: eine vergrösserte Darstellung des Speichermediums des Datenspeichers in einer Zerstörposition,
- Figur 3: eine schematische Darstellung eines Betätigungsmechanismus des erfindungsgemässen Datenspeichers im Querschnitt,
- Figur 4: eine schematische Darstellung eines Teils des erfindungsgemässen Datenspeichers mit einem alternativen Betätigungsmechanismus in der Draufsicht, und
- Figur 5a-5c: eine Darstellung des Betätigungsmittels gemäss Fig. 3 in Seitenansicht, Frontansicht und Draufsicht.

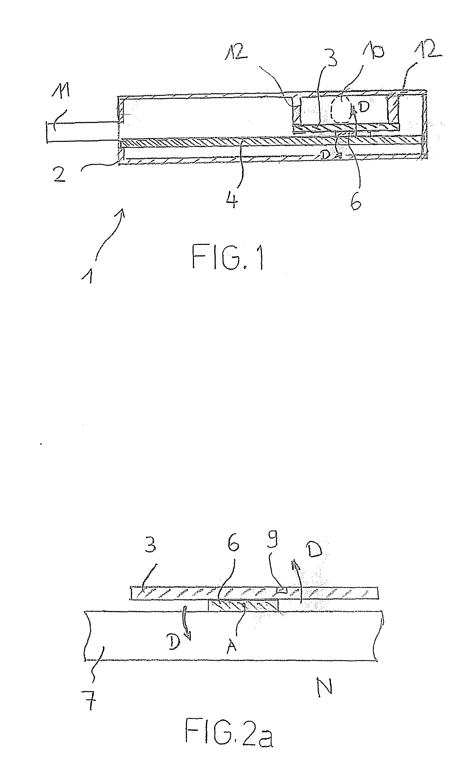

Figur 1 zeigt schematisch einen Querschnitt durch eine Mittelebene eines Datenspeichers 1. Der Datenspeicher 1 ist in an sich bekannter Art und Weise aus einem Gehäuse 2 aufgebaut. Im Gehäuse 2 ist auf einer Leiterplatte 7 ein Speichermedium 3 angeordnet. Das Speichermedium 3 ist typischerweise ein Nand-Flashspeicher. Die Leiterplatte 7 ist auf an sich bekannte Weise im Gehäuse gehalten. Die Leiterplatte 7 ist ausserdem mit nicht dargestellten an sich bekannten elektronischen Komponenten bestückt. Der Datenspeicher 1 weist einen USB-Anschluss 11 auf, mittels welchem er sich mit handelsüblichen Rechnern verbinden lässt. Zwischen der Leiterplatte 7 und dem Speichermedium 3 ist ein plattenförmiges Element 6 angeordnet. Das Speichermedium 3 ist an seinen Enden mittels Stegen 12 durch das Gehäuse 2 abgestützt. Das Gehäuse 2 ist typischerweise aus Kunststoffmaterial im Spritzgussverfahren hergestellt. Die Stege 12 können dabei einstückig mit dem Gehäuse 2 hergestellt werden.

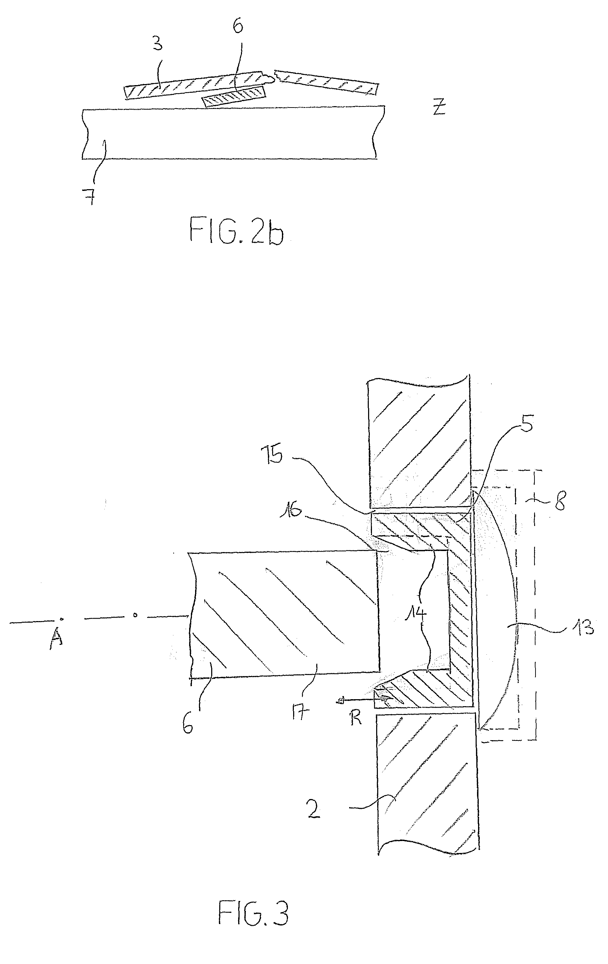

Erfindungsgemäss lässt sich durch Drehen des Elements 6 um die Achse A (siehe Fig. 2a) in Pfeilrichtung D das Speichermedium 3 zerstören. Zum Drehen des flachen Elementes 6 in Pfeilrichtung D ist ein Betätigungsmittel 5 (siehe Figur 3) vorgesehen. Das flache Element 6 ist typischerweise eine Metallplatte mit einer Dicke von 0,1 bis 0,5, einer Breite von ca. 5mm und einer den Dimensionen des Gehäuses angepassten Länge von 15mm bis 25mm. Zum Anzeigen, dass eine Zerstörung des Speichermediums 3 erfolgt ist, ist es ausserdem optional denkbar, beispielsweise im Zwischenraum zwischen den beiden Stegen 12 verkapselten Farbstoff 10 anzuordnen. Wenn das Speichermedium 3 die in Figur 2b gezeigte Zerstörstellung Z erreicht hat, wird die Kapseln 10 durch mechanischen Kontakt mit dem Speichermedium 3 zerstört, so dass die Farbe aus der Kapsel 10 austritt. Wenn das Gehäuse 2 aus transparentem Material ausgebildet ist, kann anhand von ausgelaufener Farbe festgestellt werden, dass das Speichermedium 3 irreversibel zerstört worden ist.

In Figur 2a ist schematisch ein vergrösserter Ausschnitt aus Figur 1 gezeigt. Das Speichermedium 3 ist mit einer optionalen mechanischen Sollbruchstelle 9 versehen. Die Sollbruchstelle 9 soll einen genau definierten Punkt der Zerstörung bieten. In Figur 2a ist das Element 6 in einer Normalstellung N gezeigt.

Durch Drehen des Elements 6 um die Achse A in Pfeilrichtung D gelangt das Element 6 in die in Figur 2b gezeigte Zerstörstellung Z. Durch diese Drehung wird das Speichermedium 3 im Bereich der Sollbruchstelle 9 zerbrochen.

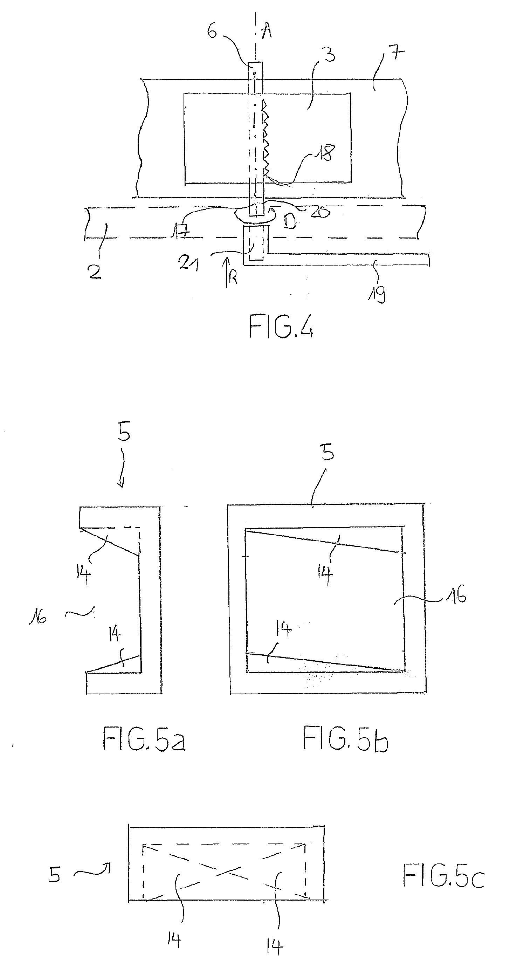

Figur 3 zeigt in vergrösserter Darstellung eine erste Ausführungsform eines Mechanismus zum Betätigen des Elements 6 im Schnitt durch eine Drehachse A in einer Ebene senkrecht zur Leiterplatte 7. Im Gehäuse 2 ist in der Gehäusewand eine Öffnung 15 vorgesehen. Die Öffnung 15 ist rechteckig ausgebildet. Das Betätigungsmittel 5 ist in der Form einer rechteckigen Hülse ausgebildet, welche in Richtung R verschiebbar und verdrehsicher in der Öffnung 15 gelagert ist. Die Hülse weist eine Öffnung 16 zur Aufnahme eines äusseren Endes 17 des Elements 6 auf. Rampenflächen 14 am Betätigungsmittel 5 führen dazu, dass sich das Element 6 um die Achse A (siehe Figur 4) dreht, sobald das Betätigungsmittel 5 in Pfeilrichtung R bewegt wird und mit den Rampenflächen 14 in Eingriff mit dem Element 6 gelangt. In Figur 3 ist schematisch eine Möglichkeit eines Betätigungsmechanismus gezeigt.

Die Öffnung 15 in der Wand des Gehäuses 2 ist durch einen Knopf 13 aus einem flexiblen Material abgedeckt. Der Knopf 13 ist mit dem Gehäuse verklebt oder verschweisst. Durch Verformen des flexiblen Knopfs 13 wird das Betätigungsmittel 5 in der Pfeilrichtung R verschoben. Zum Schutz gegen ein unbeabsichtigtes Betätigen der Membran 13 ist ausserdem eine Schutzvorrichtung 8 dargestellt. Die optionale, in gestrichelten Linien dargestellte Schutzvorrichtung 8 verhindert ein unbeabsichtigtes Betätigen der Betätigungsmittel 5 durch Drücken des Knopfs 13. Die Schutzvorrichtung 8 kann beispielsweise als über nicht dargestellte Sollbruchstellen mit dem Gehäuse verbundener Bügel ausgeführt sein. Alternativ ist es auch denkbar, den Knopf 13 aus einem derart starken Material auszubilden, dass eine Verformung nur bei gewisser Kraftaufwendung möglich ist, so dass ein unbeabsichtigtes Betätigen verhindert ist.

Selbstverständlich sind beliebige andere mechanische Lösungen denkbar, welche zu einem Drehen des Elements 6 führen z.B. kann das Element verlängert werden und ausserhalb des Gehäuses mit einem Betätigungshebel versehen sein. Eine solche Lösung ist in Fig. 4 gezeigt.

Figur 4 zeigt eine Draufsicht auf die Leiterplatte 7, auf welcher das Speichermedium 3 angeordnet ist. Unter dem Speichermedium 3 liegt das Element 6. Durch Drehen in Pfeilrichtung D verdreht sich das Element um die Achse A, so dass die in Figur 2b dargestellte Zerstörstellung Z eingenommen wird. Das äussere Ende 17 des Elementes 6 ist Mit einem Aussenmehrkant 20 versehen. Aussen am gestrichelt dargestellten Gehäuse 2 ist ein Hebel 19 gezeigt, der mit einem Innenmehrkant 21 versehen ist. Durch eine nicht im Detail gezeigte Öffnung im Gehäuse lässt sich der Innenmehrkant 21 am Hebel 19 mit dem Aussenmehrkant 20 durch Verschieben in Richtung R in Wirkverbindung bringen. Durch Drehen des Hebels lässt sich anschliessend das Element 6 drehen. Das 2-stufige Verfahren (Verschieben zum Erstellen der Wirkverbindung und Drehen des Hebels) verhindert ein versehentliches Betätigen der Betätigungsmittel. Es kann ausserdem ein Einrastmechanismus vorgesehen sein, der eine gewisse Krafteinwirkung erfordert, damit der Hebel 19 mit dem Ende 17 in Wirkverbindung gebracht werden kann. Dadurch wird versehentliches Betätigen weiter verhindert.

Das Element 6 ist mit schematisch dargestellten Zacken 18 versehen, welche die Zerstörung des Speichermediums 3 begünstigt.

Die Figuren 5a, 5b und 5c zeigen die Betätigungsmittel 5 gemäss Figur 3 in einer Seitenansicht (Figur 5a) einer Fronansicht (Figur 5b) und in einer Draufsicht (Figur 5c). Die Rampenflächen 14 am oberen bzw. am unteren Rand des Elements 5 führen bei Kontakt mit dem äusseren Ende 17 des Elements 6 zu dessen Verdrehung.

## Patentansprüche

1. Datenspeicher (1) insbesondere tragbarer Datenspeicher, mit einem Gehäuse (2)
und wenigstens einem im Gehäuse angeordneten Speichermedium (3), wobei im Gehäuse Zerstörmittel (6) zum irreversiblen mechanischen Zerstören des Speichermediums (3) angeordnet sind,
**dadurch gekennzeichnet, dass** das Gehäuse (2) von aussen zugängliche Betätigungsmittel (5, 13) aufweist, mittels welchen die Zerstörmittel (4) betätigbar sind.

2. Datenspeicher nach Anspruch 1, **dadurch gekennzeichnet, dass** die Zerstörmittel (4) wenigstens ein in einem Gehäuse (2) bewegbar angeordnetes Element (6) aufweisen, welches von einer Normalposition (N) in eine Zerstörposition (Z) bringbar ist.

3. Datenspeicher nach einem der Ansprüche 1 oder 2, **dadurch gekennzeichnet, dass** das Speichermedium (3) ein Halbleiterspeichermedium, insbesondere ein Flashspeicher ist.

4. Datenspeicher nach Anspruch 2 und 3, **dadurch gekennzeichnet, dass** das Element (6) zwischen einer Leiterplatte (7) und dem darauf angeordneten Speichermedium (3) angeordnet ist, wobei das Speichermedium (3) durch Bewegen des Elements (7) zerstörbar ist.

5. Datenspeicher nach Anspruch 4, **dadurch gekennzeichnet, dass** das Element (6) ein flaches, vorzugsweise metallisches, Element ist und dass das Element (6) um eine Achse (A) drehbar ist, sodass durch Drehen des Elementes (6) eine Kraft auf das darüber liegende Speichermedium (3) ausübbar ist.

6. Datenspeicher nach einem der Ansprüche 2 bis 5, **dadurch gekennzeichnet, dass** der Datenspeicher einen Betätigungsknopf (13) im oder einen Betätigungshebel (19) am Gehäuse (2) aufweist, wobei der Betätigungsknopf (13) bzw. der Betätigungshebel (19) derart mit dem Element (6) zusammenwirkt oder in Wirkverbindung bringbar ist, dass das Element (6) durch Betätigung des Betätigungsknopfs (13)bzw. des Betätigungshebels (19) von der Normalposition (N) in die Zerstörposition (Z) bringbar ist.

7. Datenspeicher nach Anspruch 6, **dadurch gekennzeichnet, dass** der Betätigungsknopf (13) dicht, insbesondere wasser-, staub- und/oder luftdicht am Gehäuse (2) angeordnet ist.

8. Datenspeicher nach einem der Ansprüche 1 bis 7, **dadurch gekennzeichnet, dass** der Datenspeicher (1) mit Mitteln (8; 20,21) zum Verhindern des unbeabsichtigten Betätigens der Betätigungsmittel (5, 13) versehen ist.

9. Vorrichtung nach einem der Ansprüche 1 bis 8, **dadurch gekennzeichnet, dass** das Speichermedium (3) mit einer Sollbruchstelle (9) versehen ist.

10. Datenspeicher nach einem der Ansprüche 2 bis 9, **dadurch gekennzeichnet, dass** das Element (6) eine Struktur (18) zur Förderung der Zerstörung des Speichermediums (3) aufweist.

11. Datenspeicher nach einem der Ansprüche 1 bis 10, **dadurch gekennzeichnet, dass** der Datenspeicher (1) Anzeigemittel (10) aufweist, mittels welchen anzeigbar ist, dass die Betätigungsmittel (5) betätigt worden sind und/oder, dass das Speichermedium zerstört worden ist.
